# EUROPÄISCHE PATENTSCHRIFT

(11) **EP 1 240 491 B1**
(45) Veröffentlichungstag und Bekanntmachung des Hinweises auf die Patenterteilung: **08.10.2008**
(21) Anmeldenummer: 00977527.1
(22) Anmeldetag: 10.11.2000
(51) Int. Cl.: G01M 3/20, G01M 3/22

(54) **VERFAHREN ZUM BETRIEB EINES FOLIEN-LECKSUCHERS SOWIE FÜR DIE DURCHFÜHRUNG DIESES VERFAHRENS GEEIGNETER FOLIEN-LECKSUCHER**
METHOD FOR OPERATING A FILM LEAK INDICATOR AND A CORRESPONDING FILM LEAK INDICATOR FOR CARRYING OUT SAID METHOD
PROCEDE D'EXPLOITATION D'UN DETECTEUR PELLICULAIRE DE FUITES ET DETECTEUR PELLICULAIRE DE FUITES CORRESPONDANT POUR METTRE LEDIT PROCEDE EN OEUVRE

(30) Priorität: 22.12.1999 DE 19962006
(43) Veröffentlichungstag der Anmeldung: 18.09.2002
(73) Patentinhaber: Inficon GmbH, 50968 Köln (DE)
(72) Erfinder: WIDT, Rudi, 50969 Köln (DE)
(74) Vertreter: Leineweber, Jürgen
(86) Internationale Anmeldenummer: PCT/EP2000/011152
(87) Internationale Veröffentlichungsnummer: WO 2001/046667

(56) Entgegenhaltungen:
- EP-A- 0 377 264
- EP-A- 0 432 305
- EP-A- 0 826 954
- WO-A-99/46572
- DE-A- 19 846 799
- US-A- 4 998 435
- US-A- 5 168 747
- US-A- 5 889 199
- US-A- 5 939 619

## Beschreibung

Die Erfindung betrifft ein Verfahren zum Betrieb eines Folien-Lecksuchers mit den Merkmalen des Oberbegriffs des Patentanspruchs 1. Außerdem bezieht sich die Erfindung auf einen für die Durchführung des Verfahrens geeigneten Folien-Lecksucher.

Bei der integralen Lecksuche ist das zu prüfende Objekt vor der Messung bereits mit Testgas, hier Helium, gefüllt. In der Prüfkammer wird das durch ein vorhandenes Leck austretende Helium nachgewiesen. Die natürliche Umgebungsluft enthält bereits eine kleine Menge Helium, die jedoch meist vernachlässigbar ist. Durch Abfüllprozesse kann dieser Anteil u.U. stark ansteigen. Das Nachweissystem des Lecksuchers kann nun nicht mehr eindeutig unterscheiden, ob das gemessene Helium aus dem Prüfling kommt oder aus der in der Prüfkämmer mit eingeschlossenen Umgebungsluft. Das Messergebnis wird unsicherer, die Nachweisgrenze des Lecksuchers wird kleiner.

Ein Verfahren sowie ein Folien-Lecksucher der eingangs erwähnten Art sind aus der DE 196 42 099 A1 bekannt. Hierbei besteht das geschilderte Problem.

Aus der EP 826 954 A2 ist ein Verfahren zur Lecksuche an einem Hohlkörper bekannt, der auch von innen zugänglich ist. Während der Lecksuche wird im Innenraum Testgas injiziert und auf der Außenseite ein Gasstrom erzeugt. Dieser Gasstrom wird auf das Vorhandensein von Testgas untersucht.

Die EP 432 305 A1 beschreibt ein Verfahren und eine Vorrichtung zur integralen Lecksuche, bei dem sich der Prüfling in einem Prüfbehälter befindet. Zwischen Prüfbehälter und Testgasdetektor befindet sich eine Akkumulationskammer mit relativ großem Volumen, um auch relativ kleine Lecks finden zu können.

In der US 5,168,747 A ist ein System für die Lecksuche am Gehäuse einer Dampfturbine eines elektrischen Generators offenbart. Vor dem Beginn des Lecksuchprozesses wird der Testgasdetektor kalibriert. Dieses geschieht durch den Einlass eines bekannten Volumens von Testgas in das Gehäuse der Turbine. Nach erfolgreicher Kalibrierung beginnt die eigentliche Lecksuche, indem das Gehäuse der Turbine von außen mit Testgas besprüht wird.

Der vorliegenden Erfindung liegt die Aufgabe zugrunde, den Folien-Lecksucher der eingangs erwähnten Art derart zu betreiben und auszubilden, dass erhöhte Heliumkonzentrationen in der Umgebungsluft nicht zu Fehlmessungen führen.

Diese Aufgabe wird durch die in den Patentansprüchen enthaltenen Maßnahmen gelöst.

Weitere Vorteile und Einzelheiten der Erfindung sollen anhand von in den Figuren dargestellten Ausführungsbeispielen erläutert werden. Es zeigen
- Figur 1 schematisch einen Folien-Lecksucher nach der Erfindung einschließlich seines Schaltschemas und
- Figur 2 einen Teilschnitt durch die Rahmen, in die die Folien eingespannt sind, und weitere Details in Ansicht.

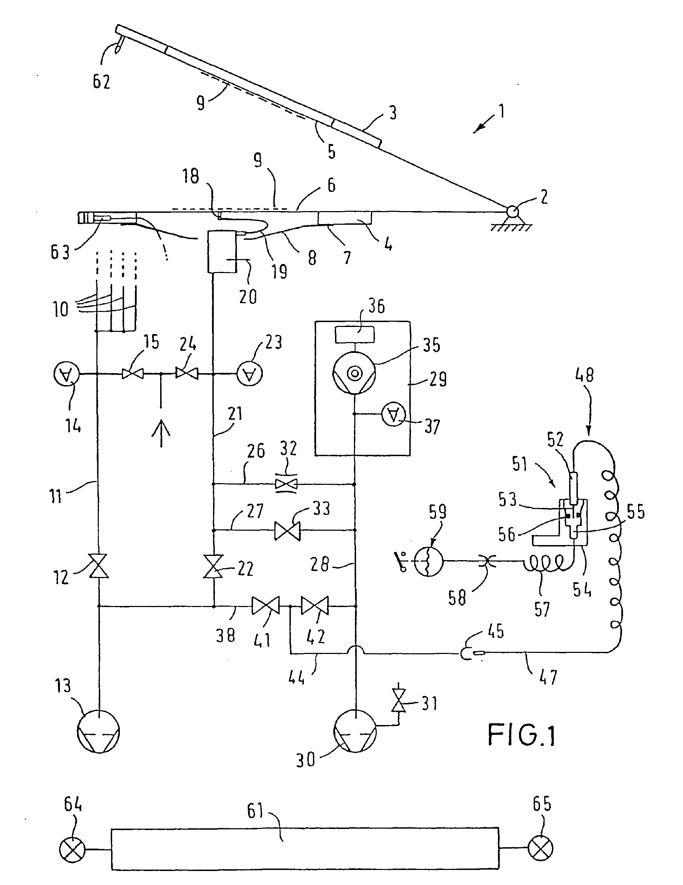

Figur 1 zeigt schematisch den Folien-Lecksucher 1 mit seinen beiden über das Gelenk 2 verbundenen Rahmen 3 und 4 sowie den darin eingespannten Folien 5 und 6. Die Rahmen 3 und 4 sind kreisförmig. Der untere Rahmen stützt sich auf dem Rand 7 eines tellerförmigen Bodens 8 - vorzugsweise aus Stahl - ab. Auf den Folien 5, 6 befindliche Vlies-Abschnitte 9 sichern die Bildung eines zusammenhängenden Testraumes bei eingelegtem Prüfling. Der prinzipielle Aufbau eines Folien-Lecksuchers ist im übrigen aus der DE-A-196 42 099 bekannt.

Der untere Rahmen 4 ist mit mehreren im einzelnen nicht dargestellten Bohrungen ausgerüstet, die in das Innere des Testraumes münden, der von den beiden Folien 5, 6 bei eingelegtem Prüfling gebildet wird. An diese Bohrungen sind die Leitungsabschnitte 10 angeschlossen, die über die gemeinsame Leitung 11 mit dem Ventil 12 mit der Vorvakuumpumpe 13 in Verbindung stehen. In Bezug auf das Ventil 12 stromaufwärts sind an die Leitung 11 noch das Druckmessgerät 14 und das Belüftungsventil 15 angeschlossen.

Die untere Folie 6 ist etwa in ihrer Mitte mit einem Leitungsanschluss 18 ausgerüstet, an die sich der Leitungsabschnitt 19, der Filter 20 und die Leitung 21 mit dem Ventil 22 anschließen. Auch die Leitung 21 ist mit einem Druckmessgerät 23 und mit einem Belüftungsventil 24 ausgerüstet.

Der Abschnitt der Leitung 21, der sich zwischen dem Anschluss des Druckmessgerätes 23 und dem Ventil 22 befindet, steht über zwei zueinander parallele Leitungen 26 und 27 mit einer Leitung 28 in Verbindung, die sich zwischen dem Testgasdetektor 29 und einer zweiten Vorvakuumpumpe 30 erstreckt. In der Leitung 26 befindet sich ein Drosselventil 32. Die Leitung 27 ist mit einem Ventil 33 ausgerüstet.

Die Vorvakuumpumpe 13 ist zweckmäßig einstufig, die Vorvakuumpumpe 30 zweistufig ausgebildet. Die Pumpe 30 ist mit einer Gasballast-Einrichtung ausgrüstet. Bei offenem Ventil 31 strömt Luft (oder auch Inertgas) in die Pumpe 30 ein.

Im Testgasdetektor 29 befindet sich eine Turbomolekularvakuumpumpe 35, deren Auslass mit der Leitung 28 in Verbindung steht. An den Einlass der Turbomolekularvakuumpumpe ist ein Massenspektrometer 36 angeschlossen. Außerdem ist ein Druckmessgerät 37 Bestandteil des Leckdetektors 29, welches den Druck in der Leitung 28 misst.

Die beiden Leitungen 11 und 28 stehen in Bezug auf die Ventile 12 und 22 stromabwärts über eine Leitung 38 in Verbindung, in die auch die Leitung 21 mündet. In dieser Leitung 38 befinden sich zwischen der Mündung der Leitung 21 und der Leitung 28 die Ventile 41 und 42. In den zwischen den Ventilen 41 und 42 befindlichen Abschnitt der Leitung 38 mündet eine Leitung 44, die mit einer Kupplung 45 in Verbindung steht. Die Kupplung 45 dient der Herstellung der Verbindung der Leitung 44 mit der Schnüffelleitung 47 eines Schnüfflers 48. Die mit 51 bezeichnete Schnüffelsonde des Schnüfflers 48 umfasst den Handgriff 52 und die Schnüffelspitze 53.

Für die Ablage der Schnüffelsonde ist ein Halter 54 vorgesehen. Dieser ist entweder am Folien-lecksucher 1 befestigt oder als separater Ständer ausgebildet. Er weist einen Hohlraum 55 auf, der bei abgelegter Sonde 51 die Schnüffelspitze aufnimmt. Außerdem ist eine Dichtung 56 vorgesehen, die den Hohlraum 55 bei abgelegter Sonde 51 gegenüber dem Handgriff 52 abdichtet. An den Hohlraum 55 schließt sich eine Leitung 57 an, die über eine Kupplung 58 mit einem im Gehäuse des Folien-Lecksuchers 1 untergebrachten Unterdruckschalter 59 in Verbindung steht. Als Schnüffelleitung 47 dient in bekannter Weise eine Kapillare (Durchmesser ca. 0,5 mm). Dieses gilt auch für die Leitung 57, damit sich der von der Schnüffelspitze 53 im Raum 55 erzeugte Unterdruck schnell auf den Unterdruckschalter 59 auswirkt.

Im Folien-Lecksucher nach Figur 1 läuft der Lecksuchzyklus automatisch ab. Zur Steuerung des Ablaufs ist die nur als Block 61 dargestellte Steuerzentrale vorgesehen. Mit ihr sind alle Messgeräte und alle zu steuernden Bauteile verbunden. Dieses gilt auch für einen Schalter, der mit dem Schließen des Testraumes betätigt wird. Beim dargestellten Ausführungsbeispiel handelt es sich um einen Näherungsschalter, der einen am Rahmen 3 vorgesehenen Metallstift 62 und einen am Rahmen 4 angeordneten Sensor 63 umfasst. Der Sensor 62 steht mit der Steuerzentrale 2 in Verbindung. Auch andere Schalter, seien sie elektrisch, mechanisch oder optisch betrieben, können zu diesem Zweck eingesetzt werden.

Die Vielzahl der elektrischen Verbindungsleitungen zwischen der Steuerzentrale 61 und den Bauteilen sind der Übersichtlichkeit halber nicht dargestellt. Mit der Steuerzentrale verbunden sind auch zwei Signallampen 64, 65, von denen eine grün, wenn ein Prüfling als dicht, und die andere rot aufleuchtet, wenn ein Prüfling als undicht erkannt wird.

Beim betriebsbereiten Folien-Lecksucher 1 nach der Hauptanmeldung sind, wenn der Testraum - wie in Figur 1 dargestellt - geöffnet bzw. der obere Rahmen 3 vom unteren Rahmen 4 abgehoben ist, sämtliche Ventile - bis auf das Ventil 41 - geschlossen. Nach dem Auflegen eines Prüflings auf die untere Folie 6 und nach dem Auflegen des oberen Rahmens 3 auf den unteren Rahmen 4 löst der Näherungsschalter 62, 63 den Ablauf eines Lecksuchvorganges aus. Dazu wird zunächst geprüft, ob sich im System ein erhöhter Heliumuntergrund befindet, der Leckmessungen verfälschen könnte. Dieses geschieht mit Hilfe des Massenspektrometers 36. Meldet es einen zu hohen Untergrund, wird das Ventil 31 geöffnet und die Pumpe 30 so lange mit Gasballast betrieben, bis der Heliumuntergrund einen unschädlichen Wert angenommen hat.

In der Regel ist ein erhöhter Helium-Untergrund nicht vorhanden, so dass mit dem Schließen des Testraumes auch der eigentliche Lecksuchzyklus beginnt. Zunächst werden die Ventile 12 und 22 geöffnet. Dieses hat eine äußerst schnelle Evakuierung des Raumes zwischen den Folien 5, 6 zur Folge. Außerhalb der Bereiche, in denen sich die Vlies-Abschnitte 9 befinden, bilden die sich unmittelbar berührenden Folien 5, 6 die Abdichtung des Testraumes.

Beim Lecksuchverfahren nach der Hauptanmeldung wird bei einem Druck von wenigen 100 mbar (100 bis 300 mbar) das Drosselventil 32 geöffnet. Es ist so bemessen, dass der notwendige Vorvakuumdruck der Turbomolekularvakuumpumpe 35 keine unzulässig hohen Werte annimmt. Mit dem Öffnen des Drosselventils 32 beginnt die Groblecksuche. Strömt Helium durch das Drosselventil 32, gelangt es im Gegenstrom durch die Turbomolekularpumpe 35 zum Massenspektrometer 36. Wird Helium registriert, ist der Prüfling undicht; der Lecksuchzyklus wird abgebrochen.

Für den Fall, dass Helium noch nicht registriert wird, wird der Evakuierprozess fortgesetzt. Erreicht der Druck einen mit dem Gerät 23 gemessenen Wert, der in der Größenordnung des Vorvakuumdruckes der Turbomolekularpumpe 35 liegt, werden die Ventile 12, 22 und 32 geschlossen und das Ventil 33 geöffnet. Es beginnt die Phase der empfindlichen Lecksuche. Diese wird abgebrochen, wenn entweder Testgas registriert wird, der Prüfling also undicht ist, oder nach einer bestimmten Zeit. Entweder wird eine feste Zeitspanne vorgegeben oder es wird so lange geprüft, bis der Druck (gemessen mit dem Gerät 23) einen bestimmten Wert unterschreitet. Wird innerhalb dieser Zeit Testgas nicht registriert, lässt dieses Ergebnis auf einen dichten Prüfling schließen.

Während der empfindlichen Lecksuchphase stellen nur die Leitungen 19, 21 und 27 die Verbindung zwischen dem Testraum und dem Leckdetektor 29 dar. Ein Platzen des Prüflings ist nicht mehr zu erwarten. Im übrigen befindet sich zwischen den Leitungen 19 und 21 der Partikelfilter 20, der jede Verunreinigung vom Leckdetektor 29 fernhält.

Die Beendigung des Lecksuchzyklus nach der Hauptanmeldung erfolgt in der Weise, dass alle bisher offenen Ventile - bis auf Ventil 41 - geschlossen und die Ventile 15, 24 geöffnet werden. Der Testraum wird belüftet, der obere Rahmen 3 kann vom unteren Rahmen 4 abgehoben werden. Zweckmäßig ist es, wenn die beiden gelenkig miteinander verbundenen Rahmen 3, 4 im Bereich des Gelenks 2 unter der Wirkung einer nicht dargestellten Federeinrichtung stehen, deren Kraft ständig in Öffnungsrichtung wirkt. Ihre Kraft sollte so bemessen sein, dass das während der Lecksuche erzeugte Vakuum den Testraum geschlossen hält und dass der Rahmen 3 nach dem Belüftungsvorgang seine Offenstellung einnimmt.

Wird während der Leckprüfung festgestellt, dass ein Prüfling undicht ist, dann ist der Benutzer daran interessiert, den Ort des Lecks kennenzulernen. Dazu ist der erfindungsgemäße Folienlecksucher mit einem Schnüffler 48 ausgerüstet. Dieser ist mit seiner Schnüffelleitung 47 über die Kupplung 45 an die Leitung 44 angeschlossen.

Solange der Schnüffler 48 nicht genutzt wird, ist er in einem Halter 54 abgelegt. Dieser Halter 54 ist mit den bereits beschriebenen Mitteln 55 bis 59 ausgerüstet, mit deren Hilfe die Steuerzentrale 61 erkennen kann, ob die Sonde 51 im Halter 54 abgelegt ist oder nicht. Auch andere Mittel - seien es mechanisch, elektrisch oder induktiv betätigte Schalter - können zu diesem Zweck verwendet werden.

Solange sich die Sonde 51 im Halter 54 befindet, wird - wie bereits erwähnt - das Ventil 41 offengehalten. Der Schnüffler befindet sich dadurch ständig im stand by. Erst dann, wenn er aus seinem Halter 54 herausgenommen wird, schließt das Ventil 41 und öffnet das Ventil 42. Der den Schnüffler 48 durchsetzende Gasstrom gelangt dadurch in die Leitung 28 und wird von der Pumpe 30 aufrechterhalten. In diesem Zustand ist die Schnüffel-lecksuche möglich. Wird Helium von der Schnüffelspitze 53 aufgenommen, gelangt es im Gegenstrom durch die Turbomolekularpumpe 35 zum Massenspektrometer 36.

Die Steuerzentrale 61 ist derart programmiert, dass es zu einer Umschaltung des Schnüfflers 48 von stand by auf Lecksuchbetrieb (Umschaltung der Ventile 41 und 42) nicht kommt, solange der Annäherungsschalter 62, 63 geschlossen ist. Die gleichzeitige, zu Fehlmessungen führende Lecksuche über den Folien-Lecksucher 1 und über den Schnüffler 48 ist dadurch ausgeschlossen.

Bei der quantitativen Lecksuche interessiert den Besucher in aller Regel die Leckrate eines aufgefundenen Lecks, gemessen in mbar 1/sec.

Bei der Untersuchung von mit hohen Stückzahlen hergestellten Prüflingen besteht jedoch auch ein Interesse daran, die Konzentration des Testgases im Prüfling zu messen. Dieses kann dadurch geschehen, dass die Schnüffelspitze 53 in den Prüfling eingestochen wird, oder dass der Prüfling mit einem definierten Leck versehen wird und im Folien-Lecksucher 1 ein Lecksuchzyklus ausgeführt wird. Die Steuerzentrale ist deshalb so ausgebildet, dass auf einem nicht dargestellten Display sowohl die Leckrate als auch die Konzentration ablesbar ist.

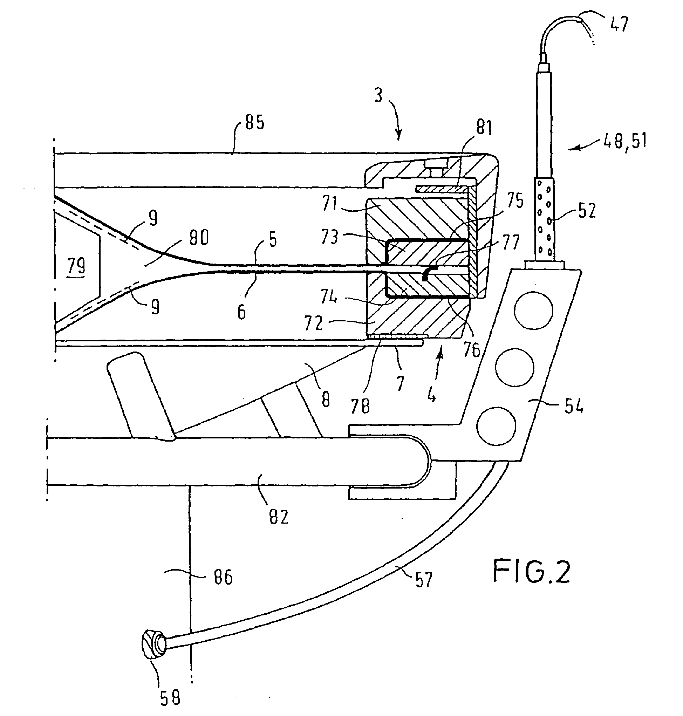

Figur 2 lässt den Aufbau der Rahmen 3 und 4 erkennen. Sie bestehen aus jeweils einem äußeren Ring 71 bzw. 72 und einem inneren Ring 73, 74. Zwischen den Ringpaaren sind die Folien 5, 6 befestigt, vorzugsweise geklebt. Die jeweils inneren Ringe befinden sich in zueinander korrespondierenden Aussparungen 75, 76. Die Aussparungen sind derart angeordnet, dass die äußeren Ringe 71, 72 in ihren dem Testraum zugewandten Bereichen einander unmittelbar gegenüberliegen und dadurch die Ebenen der eingespannten Folien 5, 6 bestimmen. Im äußeren Bereich liegen die inneren Ringe 73, 74 einander unmittelbar gegenüber. Zwischen ihnen befindet sich eine Lippendichtung 77. Die Folien 5, 6 erstrecken sich durch den winkelförmigen Spalt zwischen den jeweiligen Ringpaaren und sind entweder eingespannt oder verklebt.

In Figur 2 ist noch ersichtlich, dass die Folien 5, 6 bei einem dazwischen eingelegten Prüfling 79 einen Testraum 80 bilden. Die Vlies-Abschnitte 9 sichern die Bildung eines zusammenhängenden Testraumes 80.

Der Ring 72 des unteren Rahmens 4 stützt sich auf dem Rand 7 des tellerförmigen Bodens 8 ab und ist mit diesem verklebt (Klebeschicht 78). Dem oberen Rahmen 3 ist ein Träger zugeordnet, der von einem den Rahmen 3 von außen und teilweise von oben umfassendes Stahlprofil 81 gebildet wird. Der Rahmen 3 ist in axialer Richtung schwimmend am Stahlprofil 81 befestigt, so dass er nach seinem Absenken gleichmäßig dem gesamten Umfang des Rahmens 4 aufliegt. Durch die Evakuierung des Testraumes 80 wird zusätzlich noch eine Anpresskraft erzeugt. In axialer Richtung erstreckt sich das Stahlprofil 81 über den Rahmen 3 hinaus nach unten und bildet in der letzten Phase der Absenkbewegung eine Führung. Zur Abdeckung des Stahlringes 81 dient der Detektorring 85.

Figur 2 zeigt noch, dass der dargestellte Folien-Lecksucher mit einem umlaufenden Handgriff 82 ausgerüstet ist. An diesem ist der Halter 54 für den Schnüffler 48 befestigt. Im Halter 54 befinden sich die bereits zu Figur 2 beschriebenen Mittel die erkennen lassen, ob die Sonde 51 des Schnüfflers 48 im Halter 54 abgelegt ist oder nicht. Zwischen dem Halter 54 und dem Gehäuse 86 erstreckt sich der Kapillarschlauch 57, der in die Kupplung 58 eingesteckt ist.

Beim Lecksuchverfahren nach der Hauptanmeldung werden Maßnahmen vorgeschlagen, die es erlauben, Fehlmessungen aufgrund innerer Verseuchungen zu vermeiden. Fehlmessungen sind aber auch möglich, wenn die Umgebungsluft des Lecksuchers eine unbekannte und überhöhte Heliumkonzentration hat. Es ist also von Interesse, zumindest die Größe dieser Heliumkonzentration zu wissen, um z.B. eine eingeschränkte Nachweisgrenze zu erkennen oder in geeigneter Weise zu kompensieren.

Dieses geschieht beim Gegenstand der Zusatzanmeldung dadurch, dass die Heliumkonzentration der Luft gemessen wird, bevor die Testkammer 80 geschlossen wird. Um diese Messung zu diesem Zeitpunkt zu ermöglichen, wird das Drosselventil 32, das beim Lecksuchverfahren nach der Hauptanmeldung während der Groblecksuche offen ist, so modifiziert, dass es auch dann offen sein kann, wenn der Druck in der Leitung 21 der Atmosphärendruck ist. Bei geöffneter Kammer 80 gelangt bei offenem Ventil 32 ein kleiner Luftstrom zum Einlaß des Detektors 29. Das Massenspektrometer 36 registriert die in der eindringenden Luft vorhandene Heliumkonzentration. Die ständig gemessenen Werte werden für kurze Zeit (es reichen einige Sekunden) z.B. in der Steuereinrichtung gespeichert.

Durch diese Maßnahmen kann die Heliumkonzentration in der Luft bei sich anschließenden Lecksuchprozessen berücksichtigt werden. Wird ein solcher Prozess durch Auflegen des Rahmens 3 auf den Rahmen 4 ausgelöst, kann ein kurz vor dem Schließen der Testkammer gemessener und gespeicherter Wert der Heliumkonzentration in der Luft bei der Auswertung der Leckmessung berücksichtigt werden. Ist ein Prüfling leck, kann beispielsweise eine automatische Korrektur der Lecksuche durchgeführt werden. Bei allzu hohen Heliumkonzentrationen in der Luft kann auch eine optische oder akustische Warnung ausgelöst werden.

Wesentlich ist, dass das Drosselventil 32 so ausgebildet (ausreichend kleine Drosselöffnung) ist, dass der Vorvakuumdruck der Turbomolekularpumpe 35 auch dann keine unzulässig hohen Werte annimmt, wenn die Leitung 21 unter Atmosphärendruck steht. Das Drosselventil 32 muss zumindest vor dem Beginn eines Lecksuchprozesses bei noch geöffneter Lecksuchkammer 80 offen sein.

## Patentansprüche

1. Verfahren zum Betrieb eines der integralen Lecksuche dienenden Folien-Lecksuchers (1),der zwei jeweils in einem Rahmen (3, 4) eingespannte Folien (5, 6) aufweist, die bei eingelegtem bereits mit Helium gefüllten Prüfling einen Testraum begrenzen, und der mit zwei Vakuumpumpen (13, 30) ausgerüstet ist, bei welchem zunächst der Testraum (80) evakuiert und nach dem Evakuierbetrieb auf Lecksuchbetrieb umgeschaltet wird, **dadurch gekennzeichnet, dass** während der ersten Phase der Evakuierung des Testraumes (80) nur eine (13) der beiden Vakuumpumpen und während des Lecksuchbetriebs nur die zweite Vakuumpumpe (30) verwendet wird und dass vor dem Beginn des Lecksuchprozesses die Heliumkonzentration der Umgebungsluft festgestellt und bei der anschließenden Leckmessung berücksichtigt wird.

2. Verfahren nach Anspruch 1, bei welchem der Testraum (80) des Folien-Lecksuchers (1) sowohl über Bohrungen, die sich in einem (4) der Ränder (3, 4) befinden, als auch über einen an einer (6) der Folien (5,6) befestigten Anschlussstutzen (18) evakuierbar ist, **dadurch gekennzeichnet, dass** der Testraum (80) während der ersten Phase der Evakuierung mit Hilfe der ersten Vakuumpumpe (13) nur über die Bohrungen evakuiert wird und dass während des Lecksuchbetriebs nur der mit der zweiten Vakuumpumpe (30) in Verbindung stehende Anschlussstutzen (18) verwendet wird.

3. Verfahren nach Anspruch 1 oder 2, **dadurch gekennzeichnet, dass** ein Drosselventil (32), das beim anschließenden Lecksuchprozess der Groblecksuche dient, vor dem Beginn der Lecksuche offen gehalten wird, dass die Heliumkonzentration der durch das Drosselventil (32) strömenden Umgebungsluft laufend registriert und gespeichert wird und dass bei der sich anschließenden Leckmessung ein vor dem Schließen des Lecksuchers (1) gemessener und gespeicherter Wert der Heliumkonzentration der Umgebungsluft berücksichtigt wird.

4. Verfahren nach Anspruch 1, 2 oder 3, **dadurch gekennzeichnet, dass** ein Prüfling (79), der sich bei einer integralen Leckprüfung im Testraum (80) als undicht erwiesen hat, anschließend mit Hilfe eines Schnüfflers (48) zwecks Ortung des Lecks untersucht wird, und dass bei der integralen Lecksuche, bei der Schnüffel-Lecksuche und bei der Feststellung der Helium-Konzentration in der Umgebungsluft derselbe Detektor (29) verwendet wird.

5. Für die Durchführung des Verfahrens nach Anspruch 1 geeigneter, der integralen Lecksuche dienender Folien-Lecksucher (1), der zwei jeweils in einem Rahmen (3, 4) eingespannte Folien (5, 6) aufweist, die bei eingelegtem Prüfling einen Testraum begrenzen, und der mit zwei Vakuumpumpen (13, 30), Mitteln zur Messung der Heliumkonzentration und einer Steuerzentrale (61) ausgerüstet ist,
- bei welchem durch die Steuerzentrale gesteuerdem Verfahren zunächst der Testraum (80) evakuiert wird,
- nach dem Evakuierbetrieb auf Lecksuchbetrieb umgeschaltet wird,
- während der ersten Phase der Evakuierung des Testraumes (80) nur eine (13) der beiden Vakuumpumpen und während des Lecksuchbetriebs nur die zweite Vakuumpumpe (30) verwendet wird und
- vor dem Beginn des Lecksuchprozesses die Heliumkonzentration der Umgebungsluft festgestellt und bei der anschließenden Leckmessung berücksichtigt wird.

6. Lecksucher nach Anspruch 5, mit einem Drosselventil das so bemessen ist, dass der Vorvakuumdruck der Turbomolekularpumpe (35) auch dann keine unzulässig hohen Werte annimmt, wenn Atmosphärendruck anliegt.

## Claims

1. Method for operating a film leak detector (1) used for integral leak detection, which detector has two films (5, 6), which are each clamped in a frame (3, 4) and delimit a test space when a test piece already filled with helium is inserted, and which detector is equipped with two vacuum pumps (13, 30), the test space (80) in the detector first being evacuated and following the evacuation operation being switched over to leak detection mode, **characterized in that** during the first phase of evacuation of the test space (80) only one (13) of the two vacuum pumps is used and during the leak detection operation only the second vacuum pump (30) is used and that prior to the beginning of the leak detection process the helium concentration of the ambient air is established and taken into account during the subsequent leakage measurement.

2. Method according to claim 1, in which the test space (80) of the film leak detector (1) can be evacuated both via holes, which are located in one (4) of the edges (3, 4), and via a connection piece (18) attached to one (6) of the films (5, 6), **characterized in that** the test space (80) is evacuated during the first phase of the evacuation with the aid of the first vacuum pump (13) only via the holes and that during the leak detection operation only the connection piece (18) connected to the second vacuum pump (30) is used.

3. Method according to claim 1 or 2, **characterized in that** a throttle valve (32), which is used for coarse leak detection in the subsequent leak detection process, is kept open prior to the commencement of leak detection, that the helium concentration of the ambient air flowing through the throttle valve (32) is continuously recorded and stored and that in the subsequent leak measurement a value of the helium concentration in the ambient air that was measured and stored prior to closure of the leak detector (1) is taken into account.

4. Method according to claim 1, 2 or 3, **characterized in that** a test piece (79), which proved to be leaky in an integral leak test in the test space (80), is then examined with the aid of a sniffer (48) for the purpose of locating the leak, and that in the integral leak detection, in the sniffer leak detection and when establishing the helium concentration in the ambient air the same detector (29) is used.

5. Film leak detector (1) used for integral leak detection and suitable for executing the method according to claim 1, which detector has two films (5, 6), which are each clamped in a frame (3, 4) and delimit a test space when a test piece is inserted, and which detector is equipped with two vacuum pumps (13, 30), means for measuring the helium concentration and a control centre (61)
- in which method controlled by the control centre first the test space (80) is evacuated,
- following the evacuation operation a switchover to leak detection mode is made,
- during the first phase of evacuation of the test space (80) only one (13) of the two vacuum pumps is used and during the leak detection operation only the second vacuum pump (30) is used and
- prior to commencement of the leak detection process the helium concentration in the ambient air is established and taken into account in the subsequent leak measurement.

6. Leak detector according to claim 5, with a throttle valve that is dimensioned such that the fore-vacuum pressure of the turbomolecular pump (35) does not assume any excessively high values even if atmospheric pressure is applied.

## Revendications

1. Procédé d'exploitation d'un détecteur pelliculaire de fuites (1) servant pour la détection intégrale de fuites, qui comprend deux films (5, 6) respectivement tendus dans un cadre (3, 4), qui délimitent une chambre de test avec un échantillon déjà rempli d'hélium mis en place, et qui est équipé de deux pompes à vide (13, 30), dans lequel en outre la chambre de test (80) est mise sous vide et est commutée sur le fonctionnement de détection de fuites après l'opération de mise sous vide, **caractérisé en ce que** l'on n'utilise qu'une seule (13) des deux pompes à vide pendant la première phase de la mise sous vide de la chambre de test (80) et uniquement la deuxième pompe à vide (30) pendant la détection de fuites, et **en ce que** l'on détermine la concentration en hélium de l'air ambiant avant le commencement du processus de détection de fuites et on en tient compte lors de la mesure des fuites qui suit.

2. Procédé selon la revendication 1, dans lequel la chambre de test (80) du détecteur pelliculaire de fuites (1) peut être mise sous vide aussi bien par des perçages, qui se trouvent dans un (4) des bords (3, 4) que par un tuyau de raccordement (18) fixé à un (6) des films (5, 6), **caractérisé en ce que** l'on met sous vide la chambre de test (80) pendant la première phase de la mise sous vide à l'aide de la première pompe à vide (13) uniquement par les perçages et **en ce que** l'on n'utilise que le tuyau de raccordement (18) relié à la deuxième pompe à vide (30) pendant la détection de fuites.

3. Procédé selon la revendication 1 ou 2,
**caractérisé en ce que** l'on maintient ouverte, avant le commencement de la détection de fuites, une soupape d'étranglement (32) qui sert pour la détection de grosses fuites lors du processus de détection de fuites suivant, **en ce que** l'on enregistre et on mémorise en continu la concentration en hélium de l'air ambiant circulant à travers la soupape d'étranglement (32) et **en ce que** l'on tient compte d'une valeur de la concentration en hélium de l'air ambiant, mesurée et mémorisée avant la fermeture du détecteur de fuites (1), lors de la mesure des fuites suivante.

4. Procédé selon la revendication 1, 2 ou 3, **caractérisé en ce que** l'on examine ensuite, à l'aide d'un renifleur (48) pour localiser la fuite, un échantillon (79) qui s'est révélé non étanche lors d'une recherche intégrale de fuites dans la chambre de test (80), et **en ce que** l'on utilise le même détecteur (29) lors de la recherche intégrale de fuites, lors de la recherche de fuites par le renifleur et lors de la détermination de la concentration en hélium dans l'air ambiant.

5. Détecteur pelliculaire de fuites (1) servant pour la recherche intégrale de fuites et convenant pour la mise en oeuvre du procédé selon la revendication 1, qui comprend deux films (5, 6) respectivement tendus dans un cadre (3, 4), qui délimitent une chambre de test avec un échantillon mis en place, et qui est équipé de deux pompes à vide (13, 30), de moyens pour mesurer la concentration en hélium et d'une centrale de commande (61), dans lequel
- la chambre de test (80) est d'abord mise sous vide par des procédés commandés par la centrale de commande
- on commute sur la détection de fuites après la mise sous vide,
- on n'utilise qu'une seule (13) des deux pompes à vide pendant la première phase de la mise sous vide de la chambre de test (80) et uniquement la deuxième pompe à vide (30) pendant la détection de fuites, et
- on détermine la concentration en hélium de l'air ambiant avant le commencement de la détection de fuites et on en tient compte lors de la mesure des fuites suivante.

6. Détecteur de fuites selon la revendication 5, avec une soupape d'étranglement qui est dimensionnée de telle manière que la pression précédant le vide de la pompe turbomoléculaire (35) n'atteint pas de hautes valeurs inadmissibles, même lorsque la pression atmosphérique est appliquée.
